(19) Europäisches Patentamt / European Patent Office / Office européen des brevets

(11) **EP 4 275 257 B1**

(12) **FASCICULE DE BREVET EUROPEEN**

(45) Date de publication et mention de la délivrance du brevet:
**27.11.2024 Bulletin 2024/48**

(21) Numéro de dépôt: **22706255.1**

(22) Date de dépôt: **31.01.2022**

(51) Classification Internationale des Brevets (IPC):
**F03B 15/00** *(2006.01)*   **H02J 3/32** *(2006.01)*
**H02J 3/48** *(2006.01)*

(52) Classification Coopérative des Brevets (CPC):
**H02J 3/32; F03B 15/00; H02J 3/48;** F05B 2270/20;
F05B 2270/335; H02J 2300/20

(86) Numéro de dépôt international:
**PCT/EP2022/052233**

(87) Numéro de publication internationale:
**WO 2022/162227 (04.08.2022 Gazette 2022/31)**

(54) **SYSTÈME DE PRODUCTION D'ÉNERGIE PAR TURBINE HYDRAULIQUE ET PROCÉDÉ DE CONTRÔLE EN VUE DE FOURNIR UNE RÉPONSE DYNAMIQUE AMÉLIORÉE SUITE À DES VARIATIONS IMPORTANTES DU POINT DE CONSIGNE DE PUISSANCE**

WASSERTURBINEN-ENERGIEERZEUGUNGSSYSTEM UND STEUERUNGSVERFAHREN ZUR BEREITSTELLUNG EINER VERBESSERTEN DYNAMISCHEN REAKTION AUF STARKE SCHWANKUNGEN DES LEISTUNGSSOLLWERTS

WATER TURBINE POWER GENERATION SYSTEM AND CONTROL METHOD FOR PROVIDING IMPROVED DYNAMIC RESPONSE TO LARGE POWER SET POINT VARIATIONS.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2021 FR 2100947**
**25.01.2022 FR 2200640**

(43) Date de publication de la demande:
**15.11.2023 Bulletin 2023/46**

(73) Titulaire: **Supergrid Institute**
**69100 Villeurbanne (FR)**

(72) Inventeurs:
• **GUILLAUME, Renaud**
**69007 Lyon (FR)**
• **MESNAGE, Hugo**
**69007 Lyon (FR)**

(74) Mandataire: **Opilex**
**32, rue Victor Lagrange**
**69007 Lyon (FR)**

(56) Documents cités:
EP-A1- 3 703 213     CN-A- 111 900 721
US-A1- 2016 237 983

**Description**

[L'invention concerne une stratégie de surveillance afin d'optimiser le fonctionnement d'un système de production d'énergie hybride utilisant un système de turbine produisant de l'énergie électrique à un réseau à courant alternatif (réseau CA), comme source primaire d'énergie, et un système de stockage d'énergie, comme source secondaire. L'invention porte notamment sur la gestion des variations importantes du point de consigne de puissance électrique. La description porte également sur la gestion des variations brusques de consigne de puissance électrique.

De nombreuses centrales électriques, notamment des barrages hydroélectriques, comprennent un système de turbine afin de produire de l'énergie électrique transférée à un réseau CA par une liaison de connexion Des variations importantes de la puissance électrique peuvent être demandées par le gestionnaire de réseau CA au système de production d'énergie. En raison de ses limites physiques, le système de turbine ne peut pas fournir instantanément une variation significative de sa puissance électrique de sortie. Par exemple, la réactivité d'un système hydraulique à une variation importante du point de consigne de puissance est généralement supérieure à 30 secondes, compte tenu notamment de l'inertie de la colonne d'eau dans les conduits en amont reliés à la turbine.

Un système de turbine hydraulique est configuré pour fonctionner sur une plage de puissance de sortie spécifique. En dehors de cette plage de puissance de sortie, on peut s'attendre à plusieurs phénomènes indésirables. Par exemple, avec une turbine Francis, une instabilité du système appelée « forme en S » apparaît pour une puissance de sortie comprise entre 0 % et 20 % de la puissance de sortie nominale, un tourbillon instable apparaît entre les aubes de la turbine pour une puissance de sortie comprise entre 20 % et 40 % de la puissance de sortie nominale, un tourbillon hélicoïdal peut apparaître en aval de la turbine pour une puissance de sortie comprise entre 40 % et 60 % de la puissance de sortie nominale et un tourbillon droit en aval de la turbine peut apparaître pour une puissance de sortie comprise entre 90 % et 110 % de la puissance de sortie nominale. Ces phénomènes indésirables sont connus pour endommager certaines parties du système de turbine et l'utilisation prolongée du système dans ces conditions oblige les opérateurs à réparer les pièces endommagées, ce qui entraîne une augmentation des interruptions du système pour maintenance et, par conséquent, des coûts de maintenance.

Le système hydraulique peut être associé à un système de stockage d'énergie relié à la liaison de raccordement pour augmenter la réactivité du système de turbine pour un nouveau point de consigne de puissance électrique transmis par un opérateur de réseau CA. Un circuit de commande reçoit un point de consigne de puissance électrique envoyé par le gestionnaire de réseau CA et, en fonction de ce point de consigne, commande un transfert de puissance transitoire entre la liaison de connexion et le système de stockage d'énergie en pilotant de manière sélective la charge ou la décharge du système de stockage d'énergie. Lorsqu'un nouveau point de consigne est reçu, le système de stockage d'énergie contribue à cette variation en participant immédiatement à la variation de puissance avec la turbine.

Toutefois, compte tenu de son coût, le système de stockage d'énergie a une capacité limitée. Par conséquent, il ne peut contribuer qu'à une variation limitée de l'énergie électrique après qu'un nouveau point de consigne de puissance électrique ait été transmis par l'opérateur du réseau CA. Ainsi, la puissance électrique réelle fournie au réseau CA n'atteint pas assez rapidement le point de consigne demandé par l'opérateur du réseau CA. En effet, la réactivité à une variation de point de consigne de puissance possède une valeur marchande croissante dans le contexte de l'intégration d'un plus grand nombre d'énergies renouvelables dans les réseaux électriques. Cette valeur marchande augmente la rentabilité du système de turbine, si cette réactivité peut être améliorée.

Il est donc nécessaire d'améliorer la réactivité d'un système de production d'énergie utilisant un système de turbine afin de répondre à un nouveau point de consigne de puissance électrique impliquant une variation de puissance importante.

Par ailleurs, les fournisseurs d'énergie électrique peuvent tirer des revenus à partir d'exigences du gestionnaire de système. Ces besoins se définissent sous la forme de requêtes de fourniture d'énergie à un réseau, requêtes qui imposent parfois des temps d'activation très courts, typiquement inférieurs à 1s. De telles requêtes de puissance peuvent être demandées afin de compenser la différence entre la production et la consommation à l'échelle du réseau électrique. De tels services peuvent procurer des revenus importants aux fournisseurs d'électricité si ces délais d'ajustement de la puissance de sortie sont respectés.

Le système hydraulique peut être associé à un système de stockage d'énergie pour augmenter la réactivité du système de turbine lorsqu'une nouvelle consigne de puissance électrique est appliquée. Un circuit de commande reçoit une consigne de puissance électrique transmise par l'exploitant du réseau alternatif ou calculée à partir de l'écart de fréquence constaté au niveau de la connexion de livraison électrique, et, en fonction de cette valeur de consigne, commande un transfert de puissance transitoire entre le lien de connexion et le système de stockage d'énergie en pilotant sélectivement la charge ou la décharge du système de stockage d'énergie. Lorsqu'une telle nouvelle consigne soudaine est reçue, le système de stockage d'énergie contribue à cette variation en contribuant immédiatement à la variation de puissance avec la turbine.

Cependant, un tel système repose actuellement sur un système de stockage d'énergie ayant une capacité importante, ce qui augmente son coût et son encombrement. Afin d'améliorer la diffusion des systèmes de production d'énergie comprenant un système de stockage d'énergie, il est important de maintenir leur coût aussi bas que possible.

L'invention vise à résoudre un ou plusieurs de ces inconvénients. L'invention porte donc sur un procédé de contrôle d'un système de production d'énergie, tel que défini dans les revendications annexées.

L'invention concerne également les variantes des revendications dépendantes. L'homme du métier comprendra que chacune des caractéristiques des revendications dépendantes ou de la description peut être combinée indépendamment avec les caractéristiques d'une revendication indépendante, mais sans constituer une généralisation intermédiaire.

L'invention est définie par les revendications indépendantes 1 et 9. Les modes de réalisation préférés sont définis par les revendications dépendantes.

En outre, on identifie ici le document EP3703213 A1 de l'Art le plus proche des revendications indépendantes 1 et 9, qui se rapporte notamment au contrôle d'un système de turbine hydraulique comme revendiqué dans les préambules respectifs.

En sus, on identifie le document CN111900721 A.

D'autres caractéristiques et avantages de l'invention seront plus clairs à partir de la description qui en est donnée ci-dessous, à titre indicatif et de manière non limitative, en se référant aux dessins annexés, dans lesquels :

[Fig. 1] est une représentation schématique d'un système de production d'énergie selon un mode de réalisation de l'invention ;

[Fig.2] est un schéma illustrant l'évolution des puissances électriques à différents emplacements d'un système de production d'énergie selon une première variante de l'invention ;

[Fig.3] est un schéma illustrant l'évolution des puissances électriques à différents emplacements d'un système de production d'énergie selon une deuxième variante de l'invention ;

[Fig.4] est une représentation schématique d'un système de production d'énergie selon un autre exemple de réalisation de l'invention ;

[Fig.5] est une représentation schématique d'un système de production d'énergie selon un exemple d'un aspect non revendiqué. ;

[Fig.6] illustre la puissance électrique fournie sur l'interface de connexion avec une gestion de puissance selon un exemple d'un aspect non revendiqué. ;

[Fig.7] illustre l'énergie fournie par le dispositif de stockage d'énergie durant la gestion de puissance de la figure 6 ;

[Fig.8] illustre les puissances électriques fournies sur l'interface de connexion selon une gestion de puissance de référence ;

[Fig.9] illustre l'énergie fournie par le dispositif de stockage d'énergie durant la gestion de puissance de la figure 8.

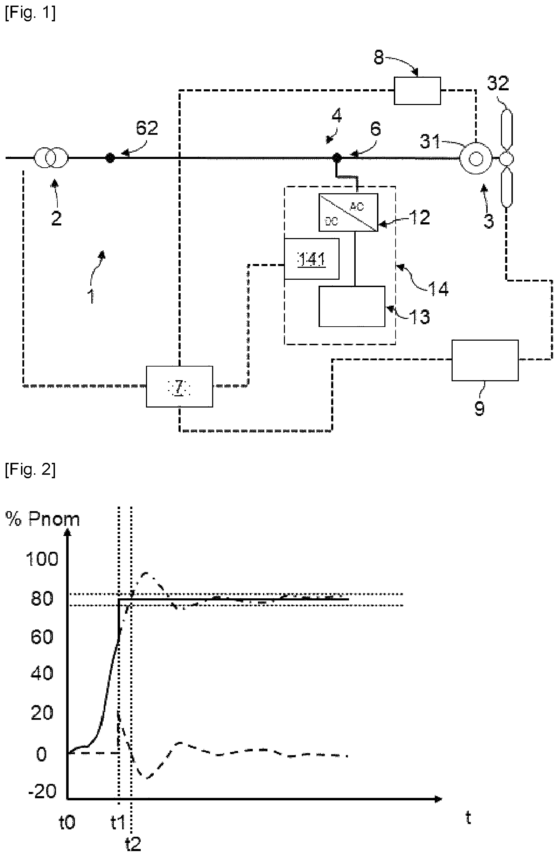

La Figure 1 est une représentation schématique d'un système de production d'énergie 1 selon un premier mode de réalisation de l'invention. Le système de production d'énergie 1 comprend un système de turbine 3, un système de stockage d'énergie 14 et une liaison de connexion 6. L'invention sera divulguée dans l'exemple spécifique d'un système de turbine hydraulique, mais peut également être appliquée à d'autres systèmes de turbine, comme les turbines à gaz.

Le système de turbine 3 comprend une machine électrique 31 (généralement une machine synchrone) et une turbine 32 couplée à la machine électrique 31. Le système de turbine 3 est essentiellement conçu pour fournir une puissance électrique à la liaison de connexion 6. Le système de turbine 3 peut également être réversible et être conçu pour fonctionner comme une pompe-turbine.

La liaison de connexion 6 comprend une interface de connexion 62 pour un réseau CA 2. La machine électrique 31 et le système de stockage d'énergie 14 sont reliés électriquement à la liaison de connexion 6. La machine électrique 31 est configurée pour générer de l'énergie électrique et la transférer au réseau CA 2 via l'interface de connexion 62.

Le système de stockage d'énergie 14 est configuré pour fournir ou absorber de la puissance électrique vers/depuis l'interface de connexion 62. Dans ce mode de réalisation de l'invention, le système de stockage d'énergie 14 comprend un transducteur électrique CA/CC 12 et un convertisseur CC 13. L'interface CA du convertisseur CA/CC 12 est connectée à la liaison de connexion 6 et l'interface CC du convertisseur CA/CC 12 est connectée au transducteur électrique CC 13 qui permet le transfert de puissance entre la liaison de connexion 6 et le transducteur CC 13.

L'interface de connexion 6 est connectée à un réseau CA 2, généralement un réseau CA triphasé. Le réseau CA 2 peut demander de la puissance électrique en fournissant des points de consigne de puissance correspondants au système de production d'énergie 1.

Le fonctionnement du système de production d'énergie 1 est piloté par un système de contrôle. Le système de contrôle de l'exemple illustré comprend un superviseur principal 7, un contrôleur 8 pour la machine électrique 31, un contrôleur 141 du système de stockage d'énergie et un contrôleur 9 pour la turbine 32.

Selon l'invention, le système de production d'énergie 1 est contrôlé comme suit. Les paramètres suivants seront utilisés dans la suite de la description.

Pnom est la puissance électrique nominale du système de turbine 3 ;

Ps0 est un point de consigne initial de la puissance électrique reçue du réseau CA 2 ;

Ps1 est un point de consigne de puissance électrique subséquent reçu du réseau CA 2 ;

$\Delta$ps = Ps1 - Ps0 correspond à la variation de puissance électrique demandée par le réseau CA 2 ;

Pt0 est la puissance électrique initiale fournie par le système de turbine 3 à l'interface de connexion 62 ;

Pti est la puissance électrique instantanée fournie par le système de turbine 3 ;

Pea est la puissance électrique que le système de stockage d'énergie peut fournir à l'interface de connexion 62 ;

Peamax est la puissance électrique maximale échangée à l'interface de connexion 62 par le système de stockage d'énergie 14, comme le permet la conception du système de stockage d'énergie 14 ;

Pe1 est la puissance électrique instantanée échangée entre l'interface de connexion 62 et le système de stockage d'énergie 14 ;

$\varepsilon$1 et $\varepsilon$2 sont respectivement les déviations de puissance inférieure et supérieure tolérées par le réseau CA 2 ;

Les étapes suivantes sont effectuées. Tout d'abord, avant un temps de référence t=0, le réseau CA 2 fonctionne avec un point de consigne de puissance électrique Ps0 envoyé par le superviseur 7 au système de turbine 3. À ce stade, la puissance Ps0 délivrée par le système de turbine 3 à l'interface de connexion 62 est égale au point de consigne de puissance électrique Ps0, disons Pt0 = Ps0.

Au temps t=0, le réseau CA 2 fournit un point de consigne de puissance subséquent Ps1. Le point de consigne de puissance correspondant Ps1 est par exemple reçu par le superviseur 7. Le point de consigne Ps1 implique une variation de puissance importante, disons qu'il répond aux exigences suivantes $\Delta$Ps = Ps1 - Ps0 et $|\Delta$Ps$|$ > Pnom * 0,3.

La variation de puissance impliquée par le point de consigne Ps1 est soit une augmentation de puissance (Ps1 > Ps0), soit une diminution de puissance (Ps0 > Ps1). Dans les deux cas, la réactivité de la puissance Pti n'est pas immédiate.

Pour une augmentation de puissance (Ps1 > Ps0) :

a) un point de consigne hydraulique est appliqué au système de turbine 3, afin d'augmenter sa puissance de sortie Pti au niveau de l'interface de connexion 62. Le superviseur 7 peut par exemple envoyer un point de consigne de puissance hydraulique au contrôleur 9. Le contrôleur 9 peut contrôler le fonctionnement de la turbine 32 en conséquence, par exemple en adaptant l'angle des pales mobiles du directeur dans une turbine Francis. Le système de stockage d'énergie 14 ne peut pas fournir de la puissance électrique de manière simultanée à l'interface de connexion 62. Ainsi, l'énergie stockée dans le système de stockage d'énergie 14 est conservée pour une utilisation ultérieure ;

b) la puissance Poa est déterminée. Poa est la puissance maximale que le système de stockage d'énergie 14 peut fournir à l'interface de connexion 62. La puissance Poa peut notamment être fournie au superviseur 7 par un contrôleur d'état de charge du système de stockage d'énergie 14 ;

c) l'exigence suivante est vérifiée : Pti + Pea $\geq$ Ps1 - $\varepsilon$1. Le superviseur 7 peut vérifier cette exigence de manière récurrente. Lorsque cette exigence est satisfaite, le système de stockage d'énergie 14 est contrôlé pour fournir la puissance électrique Pe1 à l'interface de connexion afin de satisfaire à l'exigence Ps1 - $\varepsilon$1 $\leq$ Pe1 + Pti $\leq$ Ps1 + $\varepsilon$2, avec les déviations de puissance $\varepsilon$1 et $\varepsilon$2 tolérées par le réseau CA 2.

La puissance Pe1 peut être initialement égale à Pea ou au moins égale à Pea/2, ou de préférence au moins égale à Pea*0,75. La puissance Pe1 peut être initialement supérieure à 0,05 * Pnom ou même initialement supérieure à 0,1 * Pnom.

Pour une diminution de puissance (Ps0 > Ps1) :

n) un point de consigne hydraulique est appliqué au système de turbine 3, afin de réduire sa puissance de sortie Pti au niveau de l'interface de connexion 62. Le superviseur 7 peut par exemple envoyer un point de consigne de puissance hydraulique au contrôleur 9. Le système de stockage d'énergie 14 ne peut pas récupérer la puissance électrique de manière simultanée de l'interface de connexion 62. Ainsi, la capacité de stockage du système de stockage d'énergie 14 est conservée pour une utilisation ultérieure ;

o) la puissance Poa est déterminée. La puissance Poa est la puissance maximale que le système de stockage d'énergie 14 peut récupérer de l'interface de connexion 62. La puissance Poa peut notamment être fournie au superviseur 7 par le contrôleur 141 du système de stockage d'énergie 14 ;

p) l'exigence suivante est vérifiée : Pti + Pea ≤ Ps1 + ε2. Le superviseur 7 peut vérifier cette exigence de manière récurrente. Lorsque cette exigence est satisfaite, le système de stockage d'énergie 14 est contrôlé pour récupérer la puissance électrique Pe1 de l'interface de connexion afin de satisfaire à l'exigence Ps1 - ε1 ≤ Pe1 + Pti ≤ Ps1 + ε2.

Selon l'invention, le point de consigne actualisé Ps1 peut être atteint plus rapidement sans nécessiter une capacité énergétique accrue pour le système de stockage d'énergie 14. L'invention permet de renverser un préjugé d'un homme du métier : elle enseigne à retarder l'apport de puissance du système de stockage d'énergie 14 afin d'atteindre plus rapidement le nouveau point de consigne de puissance. L'invention est particulièrement efficace si ΔPs > Pnom*0,4, et encore plus si ΔPs > Pnom*0,5. L'invention est particulièrement intéressante si ΔPs ≥ 2* Peamax.

Selon l'invention, le contrôle de la turbine 32 peut être plus agressif puisque l'utilisation du système de stockage d'énergie 14 permet un dépassement temporaire de la puissance électrique générée par la machine électrique 31 une fois que le point de consigne actualisé PS1 est atteint. En effet, une convergence rapide de Pti avec Ps1 comme limite est moins nécessaire ; les oscillations de la puissance Pti autour du point de consigne Ps1 étant tolérées. La turbine 32 ne peut donc être contrôlée qu'en tenant compte de ses seules exigences physiques. Le système de turbine 3 peut ainsi fournir un changement de puissance électrique en moins de temps.

En outre, contrôler la turbine 32 en vue d'obtenir un dépassement permet également de traiter l'état de charge du système de stockage d'énergie 14 après sa décharge, lorsque l'exigence Ps1 - ε1 ≤ Pe1 + Pti ≤ Ps1 + ε2 est satisfaite.

Un tel contrôle de la turbine 32 peut notamment s'exprimer comme suit. Lorsque l'exigence Ps1 - ε1 ≤ Pe1 + Pti ≤ Ps1 + ε2 est satisfaite, le système de turbine 3 fournit la puissance électrique Pti de manière transitoire à l'interface de connexion 62 avec Pti > Ps1 si Ps1 > Ps0, ou Pti < Ps1 si Ps0 > Ps1. La puissance électrique Pti peut répondre de façon transitoire aux relations suivantes : Pti > Ps1 si Ps1 > Ps0 ou Pti < Ps1 si Ps0 > Ps1.

Un dépassement important peut être accepté lorsque l'exigence Ps1 - ε1 ≤ Pe1 + Pti ≤ Ps1 + ε2 est satisfaite, par exemple

si Ps1 > Ps0, Pti > Ps1 + 0,1* Pnom, ou
Pti > Ps1 + 0,15* Pnom, ou encore Pti > Ps1 + 0,2* Pnom ;
si Ps0 > Ps1, Pti < Ps1 - 0,1* Pnom, ou Pti > Ps1 - 0,15* Pnom, ou encore Pti > Ps1 - 0,2* Pnom.

Une fois que l'exigence Ps1 - ε1 ≤ Pe1 + Pti ≤ Ps1 + ε2 est satisfaite, l'opérateur du réseau CA 2 peut être informé que le point de consigne de puissance Ps1 est atteint.

Les déviations de puissance ε1 et ε2 sont fixées par l'opérateur du réseau CA 2, afin de définir la tolérance aux déviations de puissance au niveau de l'interface de connexion 62. Ces déviations peuvent par exemple satisfaire aux exigences ε1 ≤ 0,02 * Pnom et ε2 ≤ 0,02 * Pnom , de préférence au procédé de contrôle selon la revendication 1, où ε1 ≤ 0,015 * Pnom et si possible où ε2 ≤ 0,015 * Pnom, et ε1 ≤ 0,01 * Pnom et ε2 ≤ 0,01 * Pnom.

Pour réduire le coût du système de stockage d'énergie 14, il peut, par exemple, être conçu de manière à ce que Peamax < 0,2 * Pnom, ou bien être conçu de manière à ce que

Peamax < 0,15 * Pnom.

Dans certains cas, l'énergie stockée dans le système de stockage d'énergie 14 est soit insuffisante, soit pas assez élevée pour satisfaire à l'exigence du point de consigne actualisé pendant une longue période. Par exemple, pour une augmentation de puissance Ps1 >Ps0, si l'énergie stockée dans le système de stockage d'énergie 14 est inférieure à Pea * (t2 - t1) / 2, l'exigence Ps1 - ε1 ≤ Pti ≤ Ps1 + ε2 peut ne pas être satisfaite avant le temps t2.

Le superviseur 7 peut intégrer un clone numérique du système de turbine 3 pour anticiper sa production de puissance électrique. Sur la base de paramètres tels que la puissance Pti, le débit d'eau, la pression à l'intérieur de la turbine ou dans ses conduits en amont, le superviseur 7 peut utiliser le clone numérique du système de turbine 3 et anticiper l'évolution de la puissance électrique transitoire instantanée Ptm fournie par la machine électrique 31 sur un horizon prévisionnel tp > t2 - t0. Lorsqu'il reçoit le point de consigne Ps1, le superviseur 7 peut anticiper la puissance instantanée Pem = Ps1 - Pti qui sera fournie par le système de stockage d'énergie 14 sur l'horizon prévisionnel tp > t2 - t0.

En intégrant le signal Pem pour une période correspondant à l'horizon prévisionnel tp > t2 - t0, le superviseur 7 peut calculer la puissance qui sera demandée au système de stockage d'énergie 14 sur l'horizon prévisionnel tp > t2 - t0. Si l'énergie actuellement stockée dans le système de stockage d'énergie 14 est inférieure à l'énergie calculée, le système de stockage d'énergie 14 ajustera son état de charge en conséquence pendant l'intervalle [t0 - t1].

Si le système de stockage d'énergie 14 n'a pas la capacité de stocker la puissance calculée, la fourniture de puissance par le système de stockage d'énergie 14 peut être reportée pour laisser la Pti augmenter encore un peu, jusqu'à ce que le système de stockage d'énergie 14 puisse fournir la puissance calculée.

Cela peut être appliqué de la même manière pour une diminution du point de consigne de puissance.

Dans les modes de réalisation de l'invention, le système de stockage d'énergie 14 peut comprendre un dispositif de stockage choisi dans le groupe constitué par un supercondensateur, une pile à combustible, une batterie électrochimique, un moteur électrique entraînant un volant d'inertie, un compresseur d'air et un stockage électromagnétique.

La Figure 2 illustre le fonctionnement d'un système de production d'énergie 1 selon un mode de réalisation de l'invention. La courbe en trait plein correspond à la puissance électrique globale fournie à l'interface de connexion 62. La courbe en points et tirets correspond à la puissance électrique fournie par la machine électrique 31 à l'interface de connexion 62. La courbe en pointillés correspond à la puissance électrique échangée par le système de stockage d'énergie 14 avec l'interface de connexion 62. La limite supérieure correspond à Ps1 + ε2, la limite inférieure correspond à Ps1 - ε2.

Dans cet exemple, Pt0 = Ps0 = 0, disons que le système de turbine 3 ne fournit pas de puissance à l'interface de connexion 62 avant t = 0. À ce stade, l'état de charge du système de stockage d'énergie 14 est suffisant pour qu'il puisse fournir une puissance électrique Poa à l'interface de connexion 62, conformément à l'invention. Le système de stockage d'énergie 14 peut être entièrement ou partiellement chargé.

Lorsque t = 0, le réseau CA 2 envoie le point de consigne de puissance Ps1 au superviseur 7, avec Ps1 = 0,8 * Pnom. Par conséquent, une augmentation significative de la puissance est demandée par le réseau CA 2. Jusqu'à ce que t = t1, le système de stockage d'énergie 14 ne peut pas fournir de la puissance électrique à l'interface de connexion 62. Le système de stockage d'énergie 14 ne peut pas échanger de la puissance électrique avec l'interface de connexion 62 avant t1. Ainsi, Pe1 = 0 entre t = 0 et t1. Jusqu'à ce que t = t1, le système de turbine 3 est contrôlé pour augmenter la puissance électrique Pti de sortie au niveau de l'interface de connexion 62. Jusqu'à ce que t = t1, Pti + Pea < Ps1. Par conséquent, le système de production d'électricité 1 n'est pas en mesure de fournir la puissance électrique correspondant à Ps1 avant t1. Jusqu'à ce que t = t1, la puissance électrique de l'interface de connexion 62 est uniquement fournie par le système de turbine 3.

Lorsque t = t1, l'exigence Pti + Pea ≥ Ps1 est satisfaite et l'état de charge du système de stockage d'énergie est suffisant pour assurer la poursuite du fonctionnement. Le système de stockage d'énergie 14 est alors contrôlé pour fournir la puissance électrique Pe1 avec Ps1 - ε1 ≤ Pe1 + Pti ≤ Ps1 + ε2. Grâce à sa contribution en puissance, le système de stockage d'énergie 14 permet d'atteindre rapidement le point de consigne de puissance Ps1.

Le système de stockage d'énergie 14 est utilisé pour satisfaire à cette exigence, même après qu'elle ait été satisfaite. Comme le montre la Figure 2, une commande agressive de la turbine 32 entraîne un dépassement de puissance après t = t2 :

Pti > Ps1. Ainsi, après t2, le système de stockage d'énergie 14 commence à récupérer l'énergie électrique de l'interface de connexion 42, afin de maintenir Ps1 - ε1 ≤ Pe1 + Pti ≤ Ps1 + ε2. La décharge précédente du système de stockage d'énergie 14 lui permet de stocker plus de puissance électrique après un tel dépassement.

Comme l'illustre la Figure 2, après t1, la puissance électrique Pti peut osciller autour du point de consigne Ps1. Le système de stockage d'énergie 14 compense ces oscillations en vue de maintenir la puissance délivrée à l'interface de connexion 62 dans les limites fixées par l'opérateur du réseau CA 2. Par conséquent, le système de stockage d'énergie 14 récupère/distribue de manière séquentielle l'énergie du/au réseau CA 2.

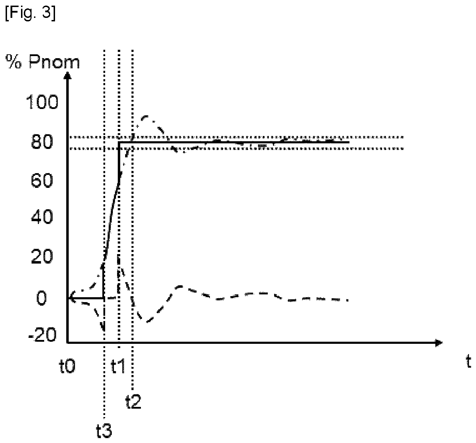

La Figure 3 illustre le fonctionnement d'un système de production d'énergie 1 selon un autre mode de réalisation de l'invention. La courbe en trait plein correspond à la puissance électrique globale fournie à l'interface de connexion 62. La courbe en points et tirets correspond à la puissance électrique fournie par la machine électrique 31 à l'interface de connexion 62. La courbe en pointillés correspond à la puissance électrique échangée par le système de stockage d'énergie 14 avec l'interface de connexion 62. La limite supérieure correspond à Ps1 + ε2, la limite inférieure correspond à Ps1 - ε2.

Dans cet exemple, Pt0 = Ps0 = 0, disons que le système de turbine 3 ne fournit pas de puissance à l'interface de connexion 62 avant t = 0. À ce stade, le système de stockage d'énergie 14 peut être entièrement ou partiellement chargé.

Lorsque t = 0, le réseau CA 2 envoie le point de consigne de puissance Ps1 au superviseur 7, avec Ps1 = 0,8 * Pnom. Par conséquent, une augmentation significative de la puissance est demandée par le réseau CA 2. Jusqu'à ce que t = t1, le système de stockage d'énergie 14 récupère la puissance électrique de l'interface de connexion 62, afin de traiter son état de charge pour la suite de son fonctionnement.

Jusqu'à ce que t = t1, le système de turbine 3 est contrôlé pour augmenter la puissance électrique Pti de sortie au niveau de l'interface de connexion 62. Jusqu'à ce que t = t1, Pti + Pea < Ps1. Par conséquent, le système de production d'électricité 1 n'est pas en mesure de fournir la puissance électrique correspondant à Ps1 avant t1.

Jusqu'à ce que t = t3, la puissance électrique fournie par le système de turbine 3 à l'interface de connexion 62 est récupérée par le système de stockage d'énergie 14. Par conséquent, jusqu'à t3, aucune puissance électrique n'est fournie à l'interface de connexion 62 ; toute la puissance électrique Pti disponible est transférée au système de stockage d'énergie 14. Cela ne cause pas de problème pour la gestion du réseau CA 2, puisque la puissance disponible n'est pas suffisante pour atteindre le point de consigne Ps1.

Lorsque t = t3, l'énergie stockée dans le système de stockage d'énergie 14 a atteint une valeur adéquate pour la poursuite du fonctionnement. Entre t3 et t1, il n'y a aucun échange de puissance entre le système de stockage d'énergie 14 et l'interface de connexion 62. La puissance électrique fournie à l'interface de connexion 62 correspond donc à la puissance électrique fournie par le système de turbine 3 à cette interface 62.

Lorsque t = t1, l'exigence Pti + Pea $\geq$ Ps1 - $\epsilon$1 est satisfaite. Le système de stockage d'énergie 14 est alors contrôlé pour fournir la puissance électrique Pe1 avec Ps1 - $\epsilon$1 $\leq$ Pe1 + Pti $\leq$ Ps1 + $\epsilon$2. Grâce à sa contribution en puissance, le système de stockage d'énergie 14 permet d'atteindre rapidement le point de consigne de puissance Ps1. Le comportement du système de production d'électricité 1 est alors identique au comportement divulgué pour le mode de réalisation de la Figure 2.

Les paramètres de commande suivants peuvent être utilisés. Le superviseur 7 peut recevoir des points de consigne de puissance actifs/réactifs du réseau CA 2. Le superviseur 7 fixera les apports respectifs en puissance du système de stockage d'énergie 14 et du système hydraulique 3, en leur fournissant des points de consigne correspondants. Le superviseur 7 peut envoyer les points de consigne respectifs aux contrôleurs 141, 8 et 9. Le superviseur 7 peut également transmettre des informations supplémentaires, par exemple la valeur de la tension du réseau CA 2 aux contrôleurs 141 et 8.

Le contrôleur 9 peut recevoir la valeur de la puissance instantanée Pti fournie par la machine électrique 31 à l'interface de connexion 62, afin de corriger le contrôle de la turbine hydraulique 32.

Le convertisseur CA/CC 12 est configuré pour être réversible en courant. Le convertisseur CA/CC 12 est commandé par le contrôleur 141.

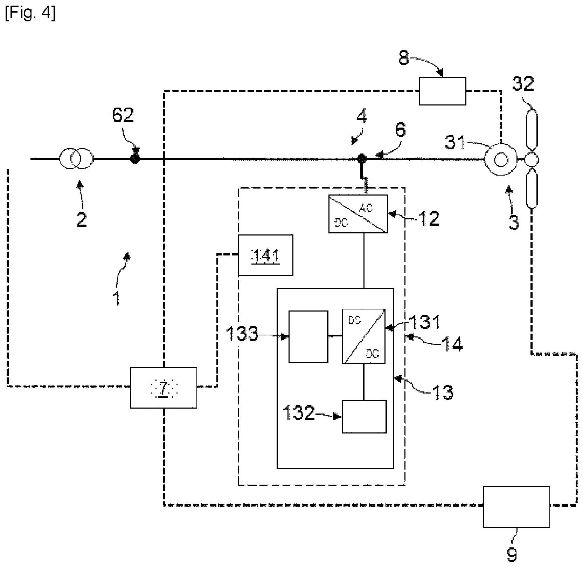

La Figure 4 est une représentation schématique d'un système de production d'énergie 1 selon un deuxième mode de réalisation de l'invention. Ce mode de réalisation est identique au deuxième, à l'exception de la structure de son dispositif de stockage d'énergie 14. Dans ce mode de réalisation, le transducteur électrique CC 13 du système de stockage d'énergie 14 comprend un convertisseur CC/CC 131 et un dispositif de stockage d'énergie électrique 132. Le convertisseur CC/CC 131 relie électriquement le système de stockage d'énergie 14 à l'interface CC du convertisseur CA/CC 12. Le convertisseur CC/CC 131 est configuré pour adapter le niveau de tension entre le dispositif de stockage 132 et l'interface CC du convertisseur CA/CC 12. Le fonctionnement du transducteur électrique 13 peut être contrôlé par un circuit de commande 133.

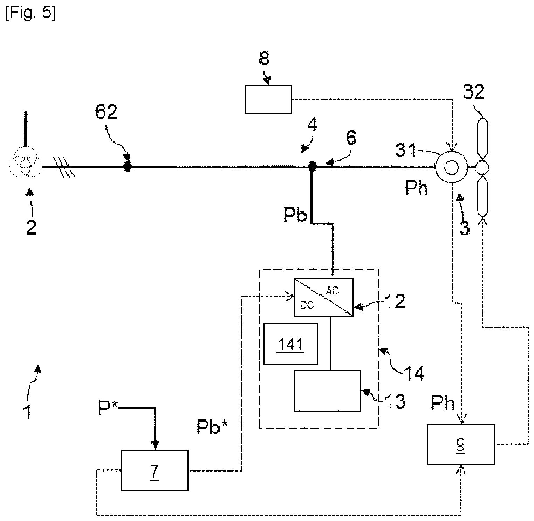

La figure 5 est une représentation schématique d'un système de production d'énergie 1 selon un autre aspect non revendiqué et ne faisant pas partie de l'invention. Le système de production d'énergie 1 comprend un système de turbine 3, un système de stockage d'énergie 14 et une liaison de connexion 6. L'aspect sera divulgué dans l'exemple spécifique d'un système de turbine hydraulique, mais peut également être appliquée à d'autres systèmes de turbine, comme les turbines à gaz.

Le système de turbine 3 comprend une machine électrique 31 (généralement une machine synchrone) et une turbine 32 couplée à la machine électrique 31. Le système de turbine 3 est essentiellement conçu pour fournir une puissance électrique à la liaison de connexion 6. Le système de turbine 3 peut également être réversible et être conçu pour fonctionner comme une pompe-turbine.

La liaison de connexion 6 comprend une interface de connexion 62 pour un réseau CA 2. La machine électrique 31 et le système de stockage d'énergie 14 sont reliés électriquement à la liaison de connexion 6. La machine électrique 31 est configurée pour générer de l'énergie électrique et la transférer au réseau CA 2 via l'interface de connexion 62.

Le système de stockage d'énergie 14 est configuré pour fournir ou absorber de la puissance électrique vers/depuis l'interface de connexion 62. Dans ce mode de réalisation de cet aspect non revendiqué, le système de stockage d'énergie 14 comprend un transducteur électrique CA/CC 12 et un convertisseur CC 13. L'interface CA du convertisseur CA/CC 12 est connectée à la liaison de connexion 6 et l'interface CC du convertisseur CA/CC 12 est connectée au transducteur électrique CC 13 qui permet le transfert de puissance entre la liaison de connexion 6 et le transducteur CC 13.

L'interface de connexion 6 est connectée à un réseau CA 2, généralement un réseau CA triphasé. Le réseau CA 2 peut demander de la puissance électrique en fournissant des points de consigne de puissance correspondants au système de production d'énergie 1.

Le fonctionnement du système de production d'énergie 1 est piloté par un système de contrôle. Le système de contrôle de l'exemple illustré comprend un superviseur principal 7, un contrôleur 8 pour la machine électrique 31, un contrôleur 141 du système de stockage d'énergie et un contrôleur 9 pour la turbine 32.

Selon ce mode de réalisation de cet aspect non revendiqué, le système de production d'énergie 1 est contrôlé comme suit.

Le contrôleur 9 est configuré pour appliquer une consigne d'un paramètre de fluide à la turbine 32, ce paramètre influençant la puissance électrique fournie par la machine électrique 31. Plus précisément, pour une turbine hydraulique 32, la consigne de paramètre de fluide peut être une consigne d'ouverture de vanne directrice de la turbine 32. La machine électrique 31 fournit ainsi une puissance électrique instantanée Ph au lien de connexion 6.

Le contrôleur 7 reçoit du réseau alternatif 2 une consigne P* à délivrer sur l'interface de connexion 62 (la consigne P* peut également être calculée localement par le contrôleur 7, par exemple en tenant compte des variations de fréquence). Avant l'instant t=0, la valeur de la consigne P* est Ps0. Le système de turbine 3 est donc commandé pour délivrer une puissance Ph0 = Ps0 sur l'interface de connexion 62. Le système de stockage d'énergie 14 n'est donc pas utilisé, ou peut être chargé ou utilisé transitoirement.

A l'instant t = 0, la valeur de la consigne P* est Ps1. ΔPs=Ps1-Ps0, avec Ps1 >Ps0. Ainsi, à l'instant t=0, une augmentation brutale de la valeur de consigne P* est demandée.

A partir d'un modèle de commande prédictive de la puissance électrique générée par le système de turbine 3, des paramètres de fonctionnement successifs du contrôleur de turbine 9 sont déterminés, afin que la puissance Ph atteigne la valeur Ps1 avec une quantité minimale d'énergie complémentaire à fournir par le système de stockage d'énergie 14. Ainsi, le contrôleur 7 envoie successivement des consignes de puissance hydraulique Ph* au contrôleur de turbine 9 jusqu'à ce que le système atteigne l'équilibre. Le contrôleur 7 envoie également des consignes de puissance successives Pb* au système de stockage d'énergie 14 jusqu'à ce que le système atteigne l'équilibre. Les consignes de puissance sont définies pour suivre la relation Ph*+Pb*= Ps1.

Les contrôleurs à modèles prédictifs (pour MPC soit Model prédictive controllers en langue anglaise) s'appuient sur des modèles dynamiques d'un processus, le plus souvent des modèles empiriques linéaires obtenus par identification d'un système. Les modèles utilisés dans les contrôleurs à modèles prédictifs sont généralement destinés à représenter le comportement de systèmes dynamiques complexes. Les contrôleurs à modèles prédictifs sont basés sur une optimisation itérative à horizon fini sous les contraintes d'un modèle de système. A l'instant t, l'état courant du système est échantillonné et une stratégie de contrôle minimisant les coûts est calculée (par un algorithme de minimisation numérique) pour un horizon temporel relativement court dans le futur : [ t, t + T ], t étant l'instant courant et T le temps de prédiction ou l'horizon de prédiction. Plus précisément, un calcul en ligne ou à la volée est utilisé pour explorer les trajectoires d'état qui émanent de l'état actuel et pour trouver (via la solution des équations d'Euler-Lagrange par exemple) une stratégie de contrôle minimisant les coûts jusqu'au temps t + T. Seulement la première étape de la stratégie de contrôle est mise en oeuvre sur le temps [t, t+Ts], Ts étant le temps d'échantillonnage du contrôleur, puis l'état du système est à nouveau échantillonné, et les calculs sont répétés à partir du nouvel état courant, donnant un nouveau contrôle et un nouveau chemin d'état prédit. L'horizon de prédiction continue d'être décalé vers le futur et pour cette raison, les contrôleurs à modèles prédictifs sont également appelés contrôleurs d'horizon fuyant.

Jusqu'à ce que le système hydraulique se stabilise à la puissance de sortie visée (Ph atteint Ps1), le système de stockage d'énergie 14 applique une puissance électrique réelle Pb sur la liaison de connexion 6, avec Pb + Ph = Ps1. Simultanément, les paramètres de fonctionnement successifs fournis par le contrôleur de turbine 9 sont appliqués à la turbine 32.

Typiquement, les paramètres de fonctionnement successifs déterminés par le contrôleur 7 sont des consignes de puissance de la turbine 32. Ces consignes sont déterminées par le contrôle de modèle prédictif, en minimisant une fonction de coût définie comme la quantité d'énergie complémentaire à fournir durant l'horizon de prédiction à la turbine pour répondre aux exigences de haut niveau associées à la nouvelle consigne de puissance. Comme objectif secondaire, le même procédé est utilisé pour assurer l'asservissement de l'état de charge du système de stockage d'énergie 14. Le calcul du meilleur ensemble de paramètres de fonctionnement du contrôleur de turbine 9 inclut également les contraintes suivantes : i) l'énergie complémentaire à fournir ne doit pas être supérieure à ce que le système de stockage d'énergie 14 peut absorber (ou fournir) en fonction de son état de charge réel, ii) la puissance complémentaire prévue ne doit pas être supérieure à ce que le système de stockage d'énergie 14 peut absorber (ou fournir) en fonction de son état de santé réel, iii) les marges de stabilité du système de turbine 3 et de son contrôleur 9 doivent être respectées.

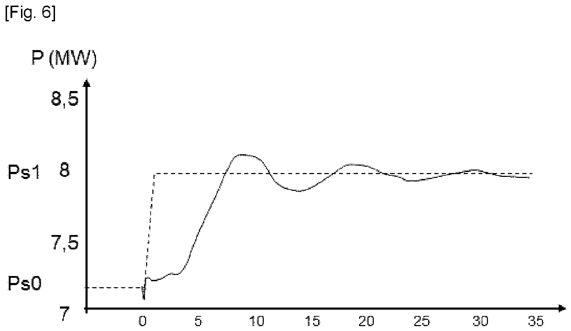

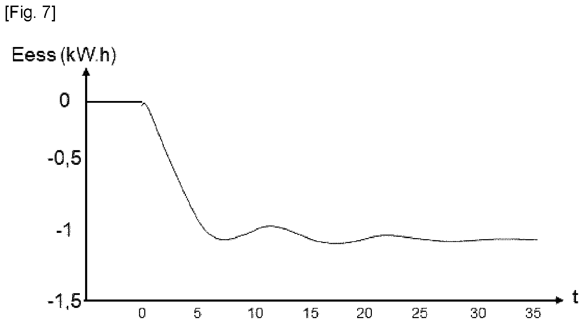

La figure 6 illustre des puissances correspondantes appliquées sur l'interface de connexion 62 selon l'aspect non revendiqué. La figure 6 illustre en pointillés la puissance électrique globale fournie sur l'interface de connexion 62. La puissance hydraulique Ph fournie sur l'interface de connexion 62 est illustrée en trait plein. La figure 7 illustre la quantité d'énergie devant être délivrée par le dispositif de stockage d'énergie 14 pendant la même période (correspondant à la zone entre les lignes en trait plein et en pointillés de la figure 6). Comme on peut le voir, l'énergie fournie par le dispositif de stockage d'énergie 14 jusqu'à ce que Ph atteigne Ps1 est par exemple d'environ 1 kW.h.

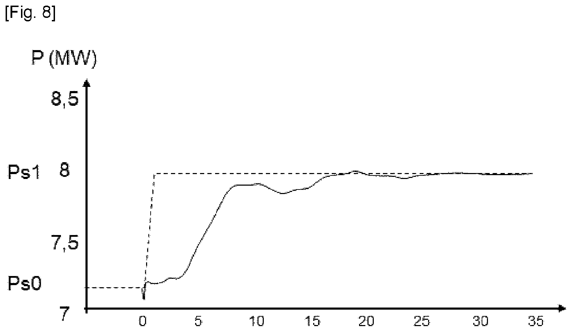

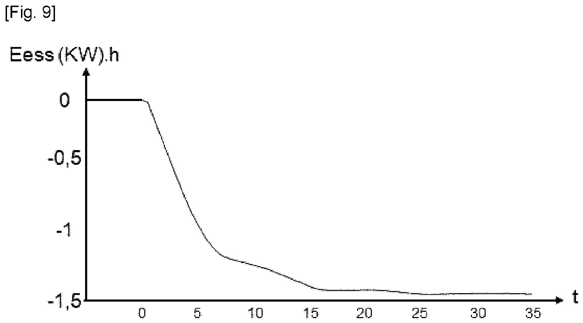

La figure 8 illustre la puissance électrique globale fournie sur l'interface de connexion 62 en pointillés, pour une gestion de puissance de référence. Selon cette gestion de puissance selon l'état de la technique, la turbine 32 est commandée pour fournir une puissance hydraulique Ph qui reste inférieure à Ps1. La puissance hydraulique Ph fournie sur l'interface de connexion 62 est illustrée en trait plein. La figure 9 illustre la quantité d'énergie devant être délivrée par le dispositif de stockage d'énergie 14 pendant la même période de gestion d'énergie. Comme on peut le voir, l'énergie fournie par le dispositif de stockage d'énergie 14 jusqu'à ce que Ph atteigne Ps1 est d'environ 1,5 kW.h.

Par conséquent, selon l'aspect, l'énergie requise du dispositif de stockage d'énergie 14 est réduite. Ainsi, un dispositif de stockage d'énergie 14 avec une capacité réduite (et donc un coût et un encombrement inférieurs) peut être utilisé.

Pour s'assurer que le dispositif de stockage d'énergie 14 est en mesure de fournir l'énergie requise au lien de connexion 6, le contrôleur 7 détermine également la quantité d'énergie complémentaire Emin que le système de stockage d'énergie 14 doit fournir au lien de connexion 6. pour répondre à l'exigence Ps1= Pb+Ph jusqu'à Ph = Ps1. La puissance électrique satisfaisant l'exigence Pb + Ph = Ps1 et l'application des paramètres de fonctionnement successifs déterminés de la turbine 32 ne sont déclenchées que lorsque l'énergie disponible instantanée du système de stockage d'énergie 14 satisfait Eess > Emin.

En fonction des exigences fixées par les gestionnaires de réseau, la puissance électrique répondant à l'exigence Pb+Ph= PS1 et l'application des paramètres de fonctionnement successifs déterminés de la turbine 32 sont déclenchées moins de 5s après la réception de la consigne de puissance électrique Ps1, de préférence moins de 2 s, de préférence moins de 1 s, de préférence moins de 500 ms, et de préférence moins de 300 ms.

Selon une autre variante de cet aspect non revendiqué, le système de génération d'énergie 1 est commandé de la manière suivante. Dans ce mode de réalisation, le contrôleur de turbine 9 est un contrôleur PID, ayant au moins un gain variable (soit un ou plusieurs parmi un gain proportionnel, un gain d'intégration et un gain de dérivation).

Comme pour la variante précédente, le contrôleur de turbine 9 est configuré pour appliquer une consigne de paramètre de fluide à la turbine 32 influençant la puissance électrique délivrée par la machine électrique 31. La machine électrique 31 délivre ainsi une puissance électrique instantanée Ph à la liaison de connexion 6.

Le contrôleur 7 reçoit du réseau alternatif 2 une consigne P* à délivrer sur l'interface de connexion 62. Avant l'instant t=0, la valeur de la consigne P* est Ps0. Le système de turbine 3 est donc commandé pour délivrer une puissance Ph0 = Ps0 sur l'interface de connexion 62. Le système de stockage d'énergie 14 n'est donc pas utilisé, ou peut être chargé ou utilisé transitoirement.

A l'instant t = 0, la valeur de la consigne P* est Ps1. ΔPs=Ps1-Ps0, avec Ps1 >Ps0. Ainsi, à l'instant t=0, une augmentation brutale de la valeur de consigne P* est demandée.

A partir d'un contrôle à modèle prédictif de la puissance électrique générée par le système de turbine 3, des valeurs successives d'un gain variable du contrôleur de turbine 9 sont déterminées, afin que la puissance Ph atteigne la valeur Ps1 avec une quantité minimale d'énergie complémentaire fournie par le système de stockage d'énergie 14. Des valeurs successives peuvent être déterminées pour plusieurs gains différents du contrôleur de turbine 9.

## Revendications

1. Procédé de contrôle d'un système de production d'électricité (1) comprenant :

   - une liaison de connexion (6) comprenant une interface de connexion (62) pour la connexion à un réseau CA (2) ;
   - un système de turbine (3) comprenant une machine électrique (31) et configuré pour délivrer une puissance électrique nominale Pnom à la liaison de connexion (6) ;
   - un système de stockage d'énergie (14) connecté à la liaison de connexion (6) ;

   le procédé de contrôle comprenant les étapes suivantes :

   - la réception depuis le réseau CA (2) d'une première consigne de puissance électrique Ps0 à délivrer à l'interface de connexion (62) et le contrôle du système de turbine (3) afin de délivrer une puissance électrique Pt0 = Ps0 à l'interface de connexion ;

   le procédé de contrôle est **caractérisé en ce que** les étapes comprennent également les étapes suivantes:

   - la réception d'un autre point de consigne de puissance électrique Ps1 du réseau CA (2) avec ΔPs = Ps1 - Ps0 et |ΔPs| > Pnom * 0,3 ;

   Si Ps1 > Ps0 :

   a) l'application d'un point de consigne hydraulique au système de turbine (3) afin d'augmenter sa puissance électrique délivrée Pti et d'empêcher le système de stockage d'énergie (14) de fournir une puissance électrique à l'interface de connexion (62) ;
   b) la détermination de la puissance Pea que le système de stockage d'énergie (14) peut fournir à l'interface de connexion ;

c) lorsque Pti + Pea $\geq$ Ps1 - $\varepsilon$1, le contrôle du système de stockage d'énergie (14) afin de fournir une puissance électrique Pe1 à l'interface de connexion en vue de satisfaire à l'exigence

Ps1 - $\varepsilon$1 $\leq$ Pe1+Pti $\leq$ Ps1 + $\varepsilon$2, avec les déviations de puissance $\varepsilon$1 et $\varepsilon$2 tolérées par le réseau CA (2) au niveau de l'interface de connexion (62) ; ou
Si Ps0 > Ps1 :

n) l'application d'un point de consigne hydraulique au système de turbine afin de diminuer sa puissance électrique délivrée Pti et d'empêcher le système de stockage d'énergie (14) de récupérer la puissance électrique de l'interface de connexion ;
o) la détermination de la puissance Pea que le système de stockage d'énergie (14) peut récupérer de l'interface de connexion (62) ;
p) lorsque Pti + Pea $\leq$ Ps1 + $\varepsilon$2, le contrôle du système de stockage d'énergie (14) pour récupérer une puissance électrique Pe1 de l'interface de connexion en vue de satisfaire à l'exigence

$$Ps1 - \varepsilon1 \leq Pe1 + Pti \leq Ps1 + \varepsilon2.$$

2. Procédé de contrôle selon la revendication 1, dans lequel $\varepsilon$1 $\leq$ 0,02 * Pnom et $\varepsilon$2 $\leq$ 0,02 * Pnom.

3. Procédé de contrôle selon la revendication 1 ou 2, dans lequel un signal de réalisation est envoyé à un système de gestion de réseau CA (2) lorsque l'exigence

$$Ps1 - \varepsilon1 \leq Pe1 + Pti \leq Ps1 + \varepsilon2$$

est satisfaite.

4. Procédé de contrôle selon l'une des revendications précédentes, dans lequel un point de consigne hydraulique est appliqué au système de turbine afin qu'il fournisse la puissance électrique Pti de manière transitoire à l'interface de connexion lorsque l'exigence

$$Ps1 - \varepsilon1 \leq Pe1 + Pti \leq Ps1 + \varepsilon2$$

est satisfaite, avec :

$$Pti > Ps1 \text{ si } Ps1 > Ps0 ;$$

ou

$$Pti < Ps1 \text{ si } Ps0 > Ps1.$$

5. Procédé de contrôle selon la revendication 4, dans lequel, lorsque l'exigence Ps1 - $\varepsilon$1 $\leq$ Pe1 + Pti $\leq$ Ps1 + $\varepsilon$2 est satisfaite, la puissance électrique Pti répond de manière transitoire à la relation :

$$Pti > Ps1 + 0,1 * Pnom \text{ si } Ps1 > Ps0 ;$$

ou

$$Pti < Ps1 - 0,1 * Pnom \text{ si } Ps0 > Ps1.$$

6. Procédé de contrôle selon la revendication 4 ou 5, dans lequel le système de stockage d'énergie (14) est contrôlé pour absorber et fournir de façon séquentielle de la puissance électrique à l'interface de connexion lorsque l'exigence Ps1 - $\varepsilon$1 $\leq$ Pe1 + Pti $\leq$ Ps1 + $\varepsilon$2 est satisfaite.

7. Procédé de contrôle selon l'une des revendications précédentes, dans lequel
Pe1 = 0 entre le moment de la réception du point de consigne Ps1 et le moment où Pti + Pea - $\varepsilon$1 $\geq$ Ps1 ou entre le moment de la réception du point de consigne Ps1 et le moment où Pti + Pea + $\varepsilon$2 $\leq$ Ps1.

8. Procédé de contrôle selon l'une des revendications 1 à 6, dans lequel, entre le moment de la réception du point de consigne Ps1 et le moment où

$$Pti + Pea - \varepsilon1 \geq Ps1 :$$

$$Pe1 < 0 \text{ si } Ps1 > Ps0 ;$$

ou

$$Pe1 > 0 \text{ si } Ps0 > Ps1.$$

9. Système de production d'énergie (1) **caractérisé en ce qu'**il comprend :

- une liaison de connexion (6) comprenant une interface de connexion (62) pour la connexion à un réseau CA (2) ;
- un système de turbine (3) comprenant une machine électrique (31) et configuré pour délivrer une puissance électrique nominale Pnom à la liaison de connexion (6) ;
- un système de stockage d'énergie (14) connecté à la liaison de connexion (6) ;
- un système de contrôle (7) configuré pour contrôler le fonctionnement du système de production d'énergie(1), le système de contrôle (7) étant configuré pour :

- la réception depuis le réseau CA (2) d'un premier point de consigne de puissance électrique Ps0 à délivrer à l'interface de connexion (62) et le contrôle du système de turbine (3) afin de délivrer une puissance électrique Pt0 = Ps0 à l'interface de connexion ;

le système de production d'énergie est **caractérisé en ce qu'**il soit également configuré pour:

- la réception d'un autre point de consigne de puissance électrique Ps1 du réseau CA (2), avec $\Delta$Ps = Ps1 - Ps0 et |$\Delta$Ps| > Pnom * 0,3 ;

Si Ps1 > Ps0 :

a) l'application d'un point de consigne hydraulique au système de turbine (3) afin d'augmenter sa puissance électrique délivrée Pti et d'empêcher le système de stockage d'énergie (14) de fournir une puissance électrique à l'interface de connexion (62) ;
b) la détermination de la puissance Pea que le système de stockage d'énergie (14) peut fournir à l'interface de connexion ;
c) lorsque Pti + Pea $\geq$ Ps1-$\varepsilon$1, le contrôle du système de stockage d'énergie (14) afin de délivrer une puissance électrique Pe1 à l'interface de connexion en vue de satisfaire à l'exigence

Ps1 - $\varepsilon$1 $\leq$ Pe1 + Pti $\leq$ Ps1 + $\varepsilon$2, avec les déviations de puissance $\varepsilon$1 et $\varepsilon$2 tolérées par le réseau CA (2) au niveau de l'interface de connexion (62) ; ou
Si Ps0 > Ps1 :

n) l'application d'un point de consigne hydraulique au système de turbine afin de diminuer sa puissance électrique délivrée Pti et d'empêcher le système de stockage d'énergie (14) de récupérer la puissance électrique de l'interface de connexion ;
o) la détermination de la puissance Pea que le système de stockage d'énergie (14) peut récupérer de l'interface de connexion (62) ;

p) lorsque Pti + Pea ≤ Ps1 + ε2, le contrôle du système de stockage d'énergie (14) pour récupérer une puissance électrique Pe1 de l'interface de connexion en vue de satisfaire à l'exigence

$$Ps1 - \varepsilon 1 \leq Pe1 + Pti \leq Ps1 + \varepsilon 2.$$

10. Système de production d'énergie (1) selon la revendication 9, dans lequel le système de stockage d'énergie (14) comprend un transducteur électrique à courant continu (13), un convertisseur CA/CC (12) ayant une interface CA connectée à la liaison de connexion (6) et une interface CC connectée au transducteur électrique à courant continu (13).

11. Système de production d'énergie (1) selon la revendication 10, dans lequel le système de stockage d'énergie (14) comprend un convertisseur CC/CC (131) configuré pour modifier le niveau de tension entre le transducteur électrique CC (132) et le convertisseur CA/CC (12).

12. Système de production d'énergie (1) selon la revendication 11, dans lequel le transducteur électrique CC (13) est choisi dans le groupe comprenant un supercondensateur, une pile à combustible, une batterie électrochimique, un moteur électrique entraînant un volant d'inertie, un compresseur d'air et un stockage électromagnétique.

13. Système de production d'énergie (1) selon l'une des revendications 9 à 12, dans lequel Pe1 > Pea /2.]

## Patentansprüche

1. Steuerverfahren eines Stromerzeugungssystems (1), umfassend:

- eine Anschlussverbindung (6), die eine Anschlussschnittstelle (62) für den Anschluss an ein Wechselstromnetz (2) umfasst;
- ein Turbinensystem (3), das eine elektrische Maschine (31) umfasst und dazu konfiguriert ist, eine elektrische Nennleistung Pnom an die Anschlussverbindung (6) zu liefern;
- ein Energiespeichersystem (14), das mit der Anschlussverbindung (6) verbunden ist;

wobei das Steuerverfahren die folgenden Schritte umfasst:

- Empfang eines ersten Sollwerts der elektrischen Leistung Ps0 aus dem Wechselstromnetz (2), der an die Anschlussschnittstelle (62) geliefert werden soll, und die Steuerung des Turbinensystems (3), um eine elektrische Leistung Pt0 = Ps0 an die Anschlussschnittstelle zu liefern; wobei das Steuerverfahren **dadurch gekennzeichnet ist, dass** die Schritte auch die folgenden Schritte umfassen:
- Empfang eines anderen elektrischen Leistungssollwerts Ps1 aus dem Wechselstromnetz (2) mit ΔPs = Ps1 - Ps0 und |ΔPs| > Pnom * 0,3;

Wenn Ps1 > Ps0:

a) Anwendung eines hydraulischen Sollwerts auf das Turbinensystem (3), um seine abgegebene elektrische Leistung Pti zu erhöhen und zu verhindern, dass das Energiespeichersystem (14) elektrische Leistung an die Anschlussschnittstelle (62) liefert;
b) Bestimmung der Leistung Pea, die das Energiespeichersystem (14) an die Anschlussschnittstelle liefern kann;
c) wenn Pti + Pea ≥ Ps1 - ε1, Steuerung des Energiespeichersystems (14), um elektrische Leistung Pe1 an die Verbindungsschnittstelle zu zum Erfüllen der Anforderung Ps1 - ε1 ≤ Pe1+Pti ≤ Ps1 + ε2 zu liefern, wobei die Leistungsabweichungen ε1 und ε2 von dem Wechselstromnetz (2) an der Anschlussschnittstelle (62) toleriert werden; oder

Wenn Ps0 > Ps1:

n) Anwendung eines hydraulischen Sollwerts auf das Turbinensystem, um seine abgegebene elektrische Leistung Pti zu verringern und zu verhindern, dass das Energiespeichersystem (14) die elektrische Leistung der Verbindungsschnittstelle (62) zurückgewinnt;

o) Bestimmung der Leistung Pea, die das Energiespeichersystem (14) von der Verbindungsschnittstelle (62) zurückgewinnen kann;

p) wenn Pti + Pea ≤ Ps1 + ε2, Steuerung des Energiespeichersystems (14), um eine elektrische Leistung Pe1 der Verbindungsschnittstelle zurückzugewinnen, um die Anforderung

$$Ps1 - \varepsilon1 \leq Pe1 + Pti \leq Ps1 + \varepsilon2$$

zu erfüllen.

2. Steuerverfahren nach Anspruch 1, wobei ε1 ≤ 0,02 * Pnom und ε2 ≤ 0,02 * Pnom.

3. Steuerverfahren nach Anspruch 1 oder 2, wobei ein Ausführungssignal an ein Wechselstromnetz-Managementsystem (2) gesendet wird, wenn die Anforderung

$$Ps1 - \varepsilon1 \leq Pe1 + Pti \leq Ps1 + \varepsilon2$$

erfüllt ist.

4. Steuerverfahren nach einem der vorstehenden Ansprüche, wobei ein hydraulischer Sollwert an das Turbinensystem angelegt wird, um die elektrische Leistung Pti vorübergehend an die Verbindungsschnittstelle zu liefern, wenn die Anforderung

$$Ps1 - \varepsilon1 \leq Pe1 + Pti \leq Ps1 + \varepsilon2$$

erfüllt ist, mit:

$$Pti > Ps1 \text{ wenn } Ps1 > Ps0;$$

oder

$$Pti < Ps1 \text{ wenn } Ps0 > Ps1.$$

5. Steuerverfahren nach Anspruch 4, wobei, wenn die Anforderung Ps1 - ε1 ≤ Pe1 + Pti ≤ Ps1 + ε2 erfüllt ist, die elektrische Leistung Pti vorübergehend die Beziehung erfüllt:
Pti > Ps1 +0,1 * Pnom wenn Ps1 > Ps0; oder

$$Pti < Ps1 - 0,1 * Pnom \text{ wenn } Ps0 > Ps1.$$

6. Steuerverfahren nach Anspruch 4 oder 5, wobei das Energiespeichersystem (14) gesteuert wird, um sequentiell elektrische Leistung sequenziell an der Verbindungsschnittstelle zu absorbieren und zu liefern, wenn die Anforderung Ps1 - ε1 ≤ Pe1 + Pti ≤ Ps1 + ε2 erfüllt ist.

7. Steuerverfahren nach einem der vorstehenden Ansprüche, wobei Pe1 = 0 zwischen dem Zeitpunkt des Empfangs des Sollwerts Ps1 und dem Zeitpunkt, zu dem Pti + Pea - ε1 ≥ Ps1, oder zwischen dem Zeitpunkt des Empfangs des Sollwerts Ps1 und dem Zeitpunkt, zu dem Pti + Pea + ε2 ≤ Ps1 ist.

8. Steuerverfahren nach einem der Ansprüche 1 bis 6, wobei zwischen dem Zeitpunkt des Empfangs des Sollwerts Ps1 und dem Zeitpunkt, zu dem

$$Pti + Pea - \varepsilon1 \geq Ps1:$$

$$\text{Pe1} < 0 \text{ wenn Ps1} > \text{Ps0;}$$

oder

$$\text{Pe1} > 0 \text{ wenn Ps0} > \text{Ps1.}$$

9. Energieerzeugungssystem (1), **dadurch gekennzeichnet, dass** es Folgendes umfasst:

- eine Anschlussverbindung (6), die eine Anschlussschnittstelle (62) für den Anschluss an ein Wechselstromnetz (2) umfasst;
- ein Turbinensystem (3), das eine elektrische Maschine (31) umfasst und dazu konfiguriert ist, eine elektrische Nennleistung Pnom an die Anschlussverbindung (6) zu liefern;
- ein Energiespeichersystem (14), das mit der Anschlussverbindung (6) verbunden ist;
- ein Steuersystem (7), das dazu konfiguriert ist, den Betrieb des Energieerzeugungssystems (1) zu steuern, wobei das Steuersystem (7) konfiguriert ist für:

- den Empfang eines ersten elektrischen Leistungssollwerts Ps0 aus dem Wechselstromnetz (2), der an die Anschlussschnittstelle (62) geliefert werden soll, und die Steuerung des Turbinensystems (3), um eine elektrische Leistung Pt0 = Ps0 an die Anschlussschnittstelle zu liefern; wobei das Energieerzeugungssystem **dadurch gekennzeichnet ist, dass** es auch konfiguriert ist für:

- den Empfang eines anderen elektrischen Leistungssollwerts Ps1 aus dem Wechselstromnetz (2), wobei $\Delta$Ps = Ps1 - Ps0 et $|\Delta$Ps$|$ > Pnom *0,3;

Wenn Ps1 > Ps0:

a) Anwendung eines hydraulischen Sollwerts auf das Turbinensystem (3), um seine abgegebene elektrische Leistung Pti zu erhöhen und zu verhindern, dass das Energiespeichersystem (14) elektrische Leistung an die Anschlussschnittstelle (62) liefert;
b) Bestimmung der Leistung Pea, die das Energiespeichersystem (14) an die Anschlussschnittstelle liefern kann;
c) wenn Pti + Pea $\geq$ Ps1-$\varepsilon$1, Steuerung des Energiespeichersystems (14), um elektrische Leistung Pe1 an die Verbindungsschnittstelle zu liefern, um die Anforderung Ps1 - $\varepsilon$1 $\leq$ Pe1 + Pti $\leq$ Ps1 + $\varepsilon$2 zu erfüllen, wobei die Leistungsabweichungen $\varepsilon$1 und $\varepsilon$2 von dem Wechselstromnetz (2) an der Anschlussschnittstelle (62) toleriert werden; oder

Wenn Ps0 > Ps1:

n) Anwendung eines hydraulischen Sollwerts auf das Turbinensystem, um seine abgegebene elektrische Leistung Pti zu verringern und zu verhindern, dass das Energiespeichersystem (14) die elektrische Leistung der Verbindungsschnittstelle zurückgewinnt;
o) Bestimmung der Leistung Pea, die das Energiespeichersystem (14) von der Verbindungsschnittstelle (62) zurückgewinnen kann;
p) wenn Pti + Pea $\leq$ Ps1 + $\varepsilon$2, Steuerung des Energiespeichersystems (14), um eine elektrische Leistung Pe1 der Verbindungsschnittstelle zurückzugewinnen, um die Anforderung Ps1 - $\varepsilon$1$\leq$Pe1 + Pti $\leq$ Ps1 + $\varepsilon$2 zu erfüllen.

10. Energieerzeugungssystem (1) nach Anspruch 9, wobei das Energiespeichersystem (14) einen elektrischen Gleichstromwandler (13), einen Wechselstrom-/Gleichstromwandler (12), der eine Wechselstromschnittstelle aufweist, die mit der Verbindungsleitung (6) verbunden ist, und einer Gleichstromschnittstelle, die mit dem elektrischen Gleichstromwandler (13) verbunden ist, umfasst.

11. Energieerzeugungssystem (1) nach Anspruch 10, wobei das Energiespeichersystem (14) einen Gleichstrom-/Gleichstromwandler (131) umfasst, der dazu konfiguriert ist, den Spannungspegel zwischen dem elektrischen Gleichstromwandler (132) dem Wechselstrom-/Gleichstromwandler (12) zu ändern.

**12.** Energieerzeugungssystem (1) nach Anspruch 11, wobei der elektrische Gleichstromwandler (13) in der Gruppe ausgewählt ist, die einen Superkondensator, eine Brennstoffzelle, eine elektrochemische Batterie, einen Elektromotor, der ein Schwungrad antreibt, einen Luftkompressor und einen elektromagnetischen Speicher umfasst.

**13.** Energieerzeugungssystem (1) nach einem der Ansprüche 9 bis 12, wobei Pe1 > Pea /2.

**Claims**

**1.** A method of controlling an electricity generation system (1) comprising:

- a feeder link (6) comprising a connection interface (62) for connection to an AC grid 2;
- a turbine system (3) comprising an electrical machine (31) and configured to deliver a nominal electrical power Pnom to the feeder link (6);
- an energy storage system (14) connected to the feeder link (6), wherein the control method comprises the following steps:

- receiving from the AC grid (2) a first electrical power setpoint Ps0 to be delivered to the connection interface (62) and controlling the turbine system (3) so as to deliver an electrical power Pt0 = Ps0 to the connection interface;
- the controlling method being **characterized in that** the steps also comprise the following steps:

- receiving another electrical power setpoint Ps1 from the AC grid (2), where $\Delta Ps = Ps1 - Ps0$ and $|\Delta Ps| > Pnom * 0.3$ ;

I f Ps1 > Ps0:

a) applying a hydraulic setpoint to the turbine system (3) to increase its electrical power output Pti and prevent the energy storage system (14) from supplying electrical power to the connection interface (62);
b) determining the power Poa that the energy storage system 14 can supply to the connection interface;
c) when $Pti + Pea \geq Ps1 - \varepsilon1$, control of the energy storage system (14) in order to supply an electrical power Pe1 to the connection interface with a view to fulfilling the requirement $Ps1 - \varepsilon1 \leq Pe1 + Pti \leq Ps1 + \varepsilon2$, with the power deviations $\varepsilon1$ and $\varepsilon2$ tolerated by the AC grid (2) at the connection interface (62); or

I f Ps0 > Ps1:

n) applying a hydraulic setpoint to the turbine system in order to decrease its electrical power output Pti and prevent the energy storage system (14) from retrieving electrical power from the connection interface;
o) determining the power Pea that the energy storage system (14) can retrieve from the connection interface (62);
p) when $Pti + Pea \leq Ps1 + \varepsilon2$, controlling the energy storage system (14) to retrieve electrical power Pe1 from the connection interface with a view to fulfilling the requirement

$$Ps1 - \varepsilon1 \leq Pe1 + Pti \leq Ps1 + \varepsilon2.$$

**2.** The control method according to claim 1, wherein $\varepsilon1 \leq 0.02 * Pnom$ and $\varepsilon2 \leq 0.02 * Pnom$.

**3.** The control method according to claim 1 or 2, wherein a completion signal is sent to a system for managing an AC grid (2) when the requirement

$$Ps1 - \varepsilon1 \leq Pe1 + Pti \leq Ps1 + \varepsilon2$$

is fulfilled.

**4.** The control method according to any of the preceding claims, wherein a hydraulic setpoint is applied to the turbine system to cause it to deliver electrical power Pti transiently to the connection interface when the requirement

$$Ps1 - \varepsilon1 \leq Pe1 + Pti \leq Ps1 + \varepsilon2$$

is fulfilled, where:

$$Pti > Ps1 \ if \ Ps1 > Ps0;$$

or

$$Pti < Ps1 \ if \ Ps0 > Ps1.$$

5. The control method according to claim 4, wherein, when the requirement $Ps1 - \varepsilon1 \leq Pe1 + Pti \leq Ps1 + \varepsilon2$ is fulfilled, the electrical power Pti transiently satisfies the relationship:

$$Pti > Ps1 + 0.1 * Pnom \ if \ Ps1 > Ps0;$$

or

$$Pti < Ps1 - 0.1 * Pnom \ if \ Ps0 > Ps1.$$

6. The control method according to claim 4 or 5, wherein the energy storage system (14) is controlled to sequentially absorb and supply electrical power to the connection interface when the requirement $Ps1 - \varepsilon1 \leq Pe1 + Pti \leq Ps1 + \varepsilon2$ is fulfilled.

7. The control method according to any of the preceding claims, wherein:
Pe1 = 0 between the time at which the setpoint Ps1 is received and the time at which $Pti + Pea - \varepsilon1 \geq Ps1$ or between the time at which the setpoint Ps1 is received and the time at which $Pti + Pea + \varepsilon2 \leq Ps1$.

8. The control method according to any of claims 1 to 6, wherein, between the moment at which the setpoint Ps1 is received and the moment at which

$$Pti + Pea - \varepsilon1 \geq Ps1:$$

$$Pel < 0 \ if \ Ps1 > Ps0 \ ;$$

or

$$Pel > 0 \ if \ Ps0 > Ps1.$$

9. A power generation system (1), **characterised in that** it comprises:

- a feeder link (6) comprising a connection interface (62) for connection to an AC grid (2);
- a turbine system (3) comprising an electrical machine (31) and configured to deliver a nominal electrical power Pnom to the feeder link (6);
- an energy storage system (14) connected to the feeder link (6);
- a control system (7) configured to control the operation of the power generation system (1), wherein the control system (7) is configured for:

- receiving from the AC grid (2) a first electrical power setpoint Ps0 to be delivered to the connection interface (62) and controlling the turbine system (3) to deliver an electrical power Pt0 = Ps0 to the connection interface;
- the power generation system being **characterized in that** it is also configured for:

- receiving another electrical power setpoint Ps1 from the AC grid (2), where $\Delta$Ps = Ps1 - Ps0 and |$\Delta$Ps| > Pnom * 0.3;

If Ps1 > Ps0:

a) applying a hydraulic setpoint to the turbine system (3) to increase its electrical power output Pti and prevent the energy storage system (14) from supplying electrical power to the connection interface (62);
b) determining the power Pea that the energy storage system 14 can supply to the connection interface;
c) when Pti + Pea $\geq$ Ps1-$\varepsilon$1, controlling the energy storage system (14) to deliver electrical power Pe1 to the connection interface to fulfil the requirement

Ps1 - $\varepsilon$1 $\leq$ Pe1 + Pti $\leq$ Ps1 + $\varepsilon$2, with the power deviations $\varepsilon$1 and $\varepsilon$2 tolerated by the AC grid (2) at the connection interface (62); or
If Ps0 > Ps1:

n) applying a hydraulic setpoint to the turbine system in order to decrease its electrical power output Pti and prevent the energy storage system (14) from retrieving electrical power from the connection interface;
o) determining the power Pea that the energy storage system (14) can retrieve from the connection interface (62);
p) when Pti + Pea $\leq$ Ps1 + $\varepsilon$2, controlling the energy storage system (14) to retrieve electrical power Pe1 from the connection interface with a view to fulfilling the requirement

$$Ps1 - \varepsilon1 \leq Pe1 + Pti \leq Ps1 + \varepsilon2.$$

10. The power generation system (1) according to claim 9, wherein the energy storage system (14) comprises a direct current electrical transducer (13), an AC/DC converter (12) having an AC interface connected to the feeder link (6) and a DC interface connected to the direct current electrical transducer (13).

11. The power generation system (1) according to claim 10, wherein the energy storage system (14) comprises a DC/DC converter (131) configured to change the voltage level between the DC electrical transducer (132) and the AC/DC converter (12).

12. The power generation system (1) according to claim 11, wherein the DC electrical transducer (13) is selected from the group comprising a supercapacitor, a fuel cell, an electrochemical battery, an electric motor driving a flywheel, an air compressor and an electromagnetic storage.

13. The power generation system (1) according to any of claims 9 to 12, wherein Pe1 > Pea /2.

[Fig. 1]

[Fig. 2]

[Fig. 3]

[Fig. 4]

[Fig. 5]

[Fig. 6]

[Fig. 7]

[Fig. 8]

[Fig. 9]

**RÉFÉRENCES CITÉES DANS LA DESCRIPTION**

**Documents brevets cités dans la description**

- EP 3703213 A1

- CN 111900721 A